# EUROPEAN PATENT SPECIFICATION

(11) **EP 0 383 866 B1**
(45) Date of publication and mention of the grant of the patent: **19.07.1995**
(21) Application number: 89907785.3
(22) Date of filing: 22.06.1989
(51) Int. Cl.: A01B 45/02

(54) **GRASS TREATMENT APPARATUS**
GRASBEHANDLUNGSVORRICHTUNG
APPAREIL DE TRAITEMENT DE L'HERBE

(30) Priority: 22.06.1988 GB 8814861; 20.01.1989 GB 8901260
(43) Date of publication of application: 29.08.1990
(73) Proprietor: WARKE, William Lyle, Coleraine, Londonderry BT52 1JE (GB)
(72) Inventor: WARKE, William Lyle, Coleraine, Londonderry BT52 1JE (GB)
(74) Representative: Earnshaw, Geoffrey Mark
(86) International application number: GB8900702
(87) International publication number: WO8912381

(56) References cited:
- EP-A- 0 134 350
- EP-A- 0 195 103
- GB-A- 1 047 918
- GB-A- 1 347 967
- GB-A- 1 568 917
- US-A- 4 645 012

## Description

This invention relates to ground treatment apparatus and particularly to an aerator.

Grass and particularly lawn aeration is a well known technique for improving the quality of a lawn and is achieved by spiking the lawn to a desired depth (usually about 15cm) with a determined number of spike holes to the square metre. Spiking can be achieved by a simple manual or pedal spiking tool eg. a tool having an array of spikes (which can be solid or tubular prongs) pushed into the ground, or a more involved multiprong rotary arrangement having a cylindrical body from which extend radial solid prongs with the rotary arrangement being pushed across the ground, or a more sophisticated crank-driven apparatus such as that described in US-4645012 (Ryan). The simple tool is slow and laborious to use if large areas are to be covered. The rotary arrangement is quicker to use however it suffers from the disadvantage of pulling up or tearing the lawn as each prong exits and is limited as to how close a hole pattern can be achieved. While this may not be important in a domestic garden context, it is not acceptable in a commercial environment such as a golf course. The apparatus suffers from the disadvantage that it imparts a vertical action to the implement however no horizontal motion is imparted and therefore the implement does not enter and exit the ground vertically giving rise to slight tearing or elongating of the holes. The design of the apparatus also having only two crank arms cannot achieve a close hole pattern without overloading each arm with tines. The crankshaft construction of these apparatus are either of such that multi-arm arrangements are difficult and expensive or are of a solid one piece construction necessitating the use of split or shall bearings which require daily greasing or an expensive oil pump lubrication system.

EP-A-O 195 103 discloses a ground treatment apparatus comprising an open bottomed support body, at least one treatment implement adapted to move through the open bottom, means carried by the body to drive the treatment implement with a combination of vertical and horizontal oscillations and biasing means to normally hold the implement in a substantially vertical attitude when stationary.

It is an object of the present invention to obviate or mitigate the aforesaid disadvantages.

Accordingly, the present invention is a ground treatment apparatus comprising a support body having an open bottom; at least one treatment implement supported by said support body and being movable through said open bottom of said support body, said at least one treatment implement having an implement head extending vertically; driving means carried by said support body for driving said treatment implement in a cyclical path relative to said support body, said cyclical path including both vertical and horizontal movement; biasing means for biasing said implement to a substantially vertical disposition when said implement is stationary with respect to said support body, and said driving means including a connecting link having a first end and a second end, said first end being pivotably connected to said support body; an arm lever having a central portion, a first end pivotably connected to said second end of said connecting link, and a second end connected to said at least one treatment implement; a drive mechanism connected to said central portion of said arm lever for cyclically driving said arm lever in a substantially circular motion; the support body being supported off the ground by ground-engaging support arrangements at the leading and trailing ends, respectively, of the support body, the support arrangements being mounted on the body in an adjustable manner whereby the body is tiltable from a first position whereat the spiking devices can penetrate the ground characterised in that position-changing means for movement of the body between first and second positions and vice versa comprises an elongate handle (51) manipulatable lengthwise between said first and second positions, the handle having a transverse groove engagable in the second position around a transverse pin of a locking mechanism, and a projection engagable in the first position against said pin.

Preferably, the handle extends through the body and is pivotally connected to a beam united with at least two spaced brackets pivoted on a cross shaft, the brackets carrying on the opposite side of the cross shaft from the beam ground-engaging support arrangements.

Preferably also, the locking mechanism is carried on a lift bar secured to the body in a parallel attitude to said handle, the locking mechanism comprising said transverse pin and a biasing mechanism to hold the groove of the handle in engagement with said pin.

Preferably also, the or each treatment implement is a ground spiking device. A plurality of treatment implements are desirably provided in a lateral array. The treatment implements preferably are mounted on the driving means out of phase with each other.

Preferably also, the driving means comprises a drive mechanism and a series of arm levers carried thereon to impart combined vertical and horizontal movements to the implements. Power means is preferably provided to operate the driving means.

The support body is desirably rectangular in plan and is preferably supported off the ground by ground-engaging support arrangements desirably at the leading and trailing ends, respectively of the support body. The support arrangements are desirably mounted on the body in an adjustable manner whereby the body is tiltable from a first position whereat the spiking devices can penetrate the ground, to a second position whereat all of the spiking devices are precluded from engaging the ground.

By virtue of the horizontal movements of the devices, the apparatus is beneficially propelled by the reaction of the devices with the ground. Alternatively, the support arrangements are preferably wheel arrangements and a transmission drive is provided from the drive mechanism to operate the wheel arrangements at the trailing end of the body.

Preferably also, the drive mechanism, on rotation, imparts eccentric motion to the levers. The drive mechanism is preferably a crankshaft having a series of crank pins. The crankshaft is preferably assembled from similar cylindrical segments bolted together, and the centre line segments of the crankshaft each are provided with a rabbet to receive an adjoining crank pin. The axes of the crank pins are desirably out of phase with each other.

Preferably further, two clutch mechanisms are provided to permit different spiking patterns to be selected for use. Control means are desirably provided to enable one or other of the clutch mechanisms to be selected.

Embodiments of the present invention will now be described, by way of example, with reference to the accompanying schematic drawings, in which:-
Fig. 1 is a side elevational view of a ground treatment apparatus according to a first embodiment of the present invention with the nearest lateral side of a support body cut-away for clarity;
Fig. 2 is a side elevational view of a ground treatment apparatus according to a second embodiment with the nearest lateral side cut-away for clarity and some components common with the first embodiment being omitted for clarity;
Fig. 3 is a side elevational view of a ground treatment apparatus according to a third embodiment with the nearest lateral side cut-away for clarity and with parts shown in Figs. 1 and 2 common with this embodiment omitted;
Fig. 4 is a detailed view of a front wheel arrangement of the apparatus shown in Fig. 3;
Fig. 5 is a plan view of a power transmission arrangement of the apparatus shown in Fig. 3;
Figs. 6A and 6B are respectively a front elevational view and an end view in the direction 'X' of Fig. 6A of a crankshaft according to the present invention;
Figs. 7A, 7B, 7C, 7D, and 7E are respectively end views of a crankshaft to a smaller scale than used in Fig. 6 showing the different out of phase sequences for two, three, four, five and six crank pins;
Fig. 8 is a detail of a double acting spring plunger, lever and implement head used in the third embodiment; and
Fig. 9 is a rear view of an apparatus as shown in Fig 1, 2 or 3 showing a lateral array of spiking devices.

Referring to the drawings, in general to all embodiments, a ground treatment apparatus is a lawn spiking aerator comprising an open-bottomed support body 10 with two or more treatment implements in the form of spiking devices 12 adapted to move through the open bottom. Means are carried by the support body 10 for driving the devices 12 in a cyclical path relative to said support body and including both vertical and horizontal movements with biasing means 14 normally to hold the devices 12 in a vertical attitude or substantially so when stationary.

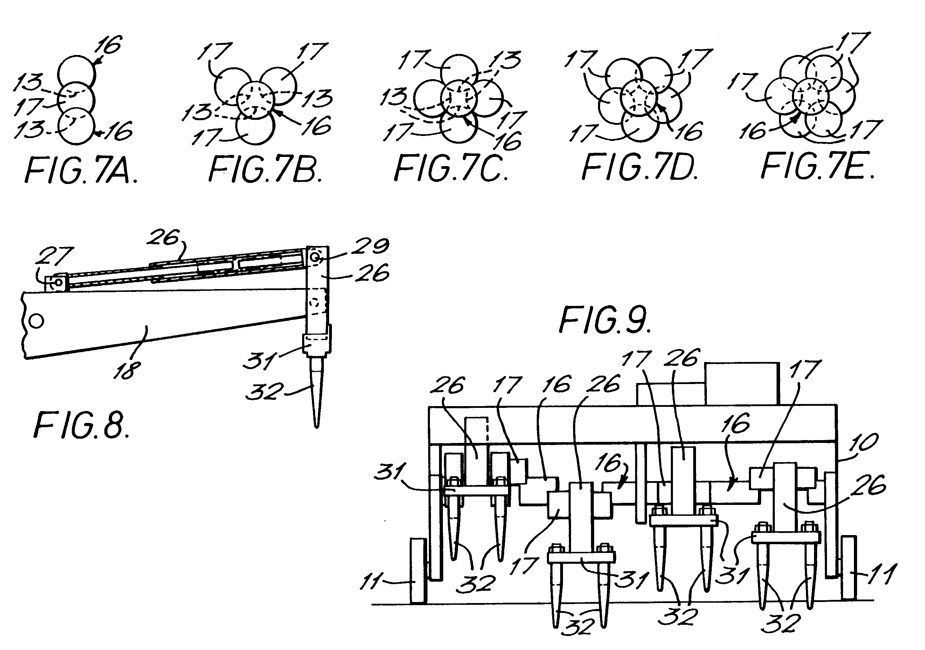

Four spiking devices 12 as shown in Fig. 9 are provided in a lateral array. The spiking devices 12 are mounted on the driving means out of phase with each other.

The driving means comprises a drive mechanism 16 and a series of arm levers 18 carried thereon each to impart the combined vertical and horizontal movements to the respective devices 12. The drive mechanism 16, on rotation, imparts eccentric motion to the levers 18. The drive mechanism 16 is a crankshaft having a series, equal in number to the number of arm levers 18, of crank pins.

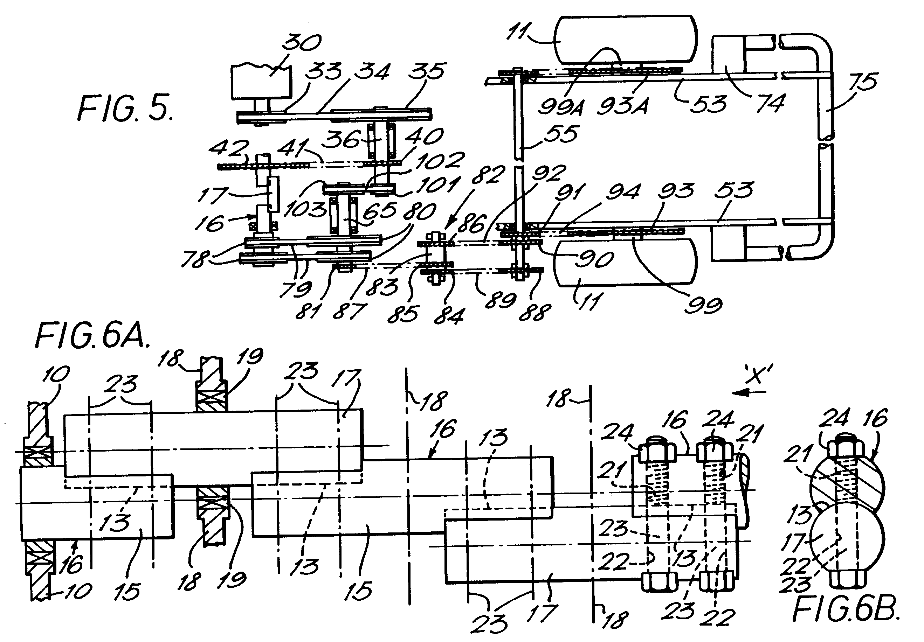

The crankshaft 16 is assembled from similar cylindrical segments 15 bolted together. The centre line segments 15 of the crankshaft 16 are each provided with an arcuate rabbet 13 as shown in Figs 7A-7E to receive an adjoining crank pin 17. The axes of the crank pins 17 are out of phase with each other as shown in Figs. 7A - 7E. Tapped bores 21 are provided in the segments 15 of the crankshaft 16 and straight bores 22 of the crank pins 17. Bolts 23 and locking nuts 24 are provided for engagement through each aligned tapped bore 21 and straight bore 22 with the bolt head on the outside of the crank pin 17 and the thread of the bolt 23 engaging the thread of the tapped bore 21 with the locking nut 24 tightened on the outer end of the bolt 23 extending through the segment 15 of the crankshaft 16 (only two bolts and nuts are shown in Fig. 6A with the location of the others indicated only by a centre line). Alternatively, socket head cap screws (not shown) can be used with the head being flush with the circumference of the crank pin. A fine screw thread can be used to prevent the bolt vibrating loose eliminating the need for a locking nut. The levers 18 are each pivotally mounted at a central portion thereof through a bearing 19 on a crank pin 17 with the first or forward end pivotally connected to a second end of a connecting link 20 otherwise pivotally connected at the first end to an anchorage 25 on the body 10. The second or rearward end of each lever 18 carries an implement head 26. An anchorage 27 is provided on the upper side of each lever 18 for connection of one end of the biasing means 14 in the form of a spring plunger 28. A pivotal anchorage 29 is provided on the head 26 adjacent to its top as shown for connection by the other end of the plunger 14. The bottom of the head 26 carries a spiking device 12 comprising a holder 31 having two spaced tines 32 depending therefrom. The tines 32 are hollow tubes.

The support body 10 is a casing and is substantially rectangular in plan and is supported off the ground by four wheel arrangements 11, two each at the leading and trailing ends thereof. The wheel arrangements 11 are mounted on the body 10 in an adjustable manner whereby the body 11 is tiltable from a first position whereat the spiking devices 12 can penetrate the ground, to a second Position whereat all of the spiking devices 12 are precluded from engaging the ground.

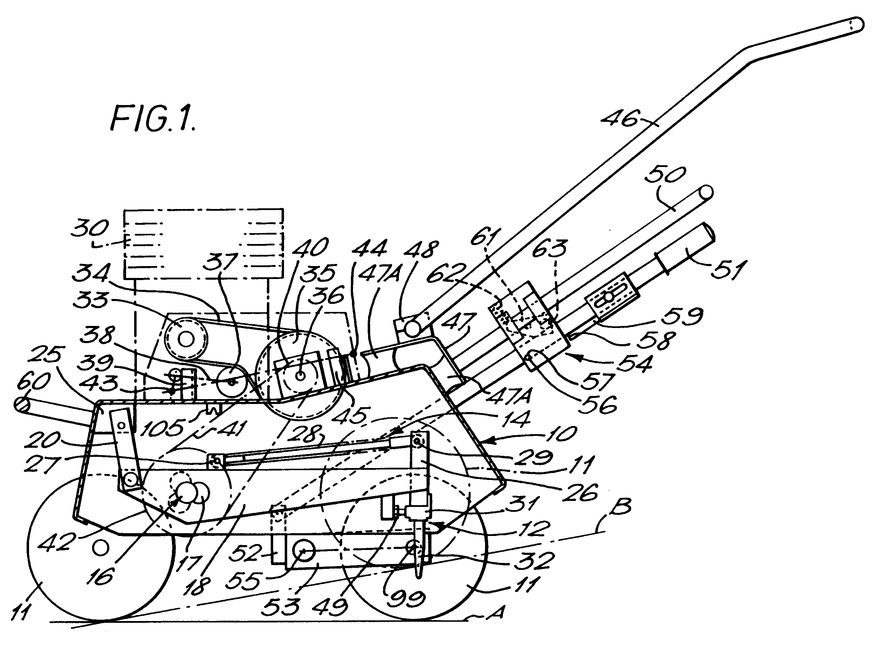

Power means in the form of an engine 30 is provided together with a power transmission arrangement to operate the drive means. The power transmission arrangement comprises an engine pulley wheel 33 connected through a pulley belt 34 to a drive pulley wheel 35 on a drive shaft 36. A jockey pulley wheel 37 is provided to tension the belt 34. The jockey wheel 37 is pivotally mounted on an arm (indicated by centre line) 38 (Fig. 1) pivotally mounted on a mounting 39 upstanding from the body 10 and tension controlled manually by a Bowden cable (not shown) secured at 43 on arm 38 and passed through a fixing point 44 on upstand 45 and then to near the top of an operating handle 46. The operating handle 46 is mounted on the body 10 on a block 48 fixed to a plate 47 secured to the body 10 through anti-vibration mountings 47A of, for example rubber. The drive shaft 36 fixedly carries a drive sprocket wheel 40 and the crankshaft 16 fixedly carries a sprocket wheel 42 around both of which wheels 40, 42 a meshing chain 41 is entrained.

Means to move the rear wheel arrangements 11 from the second position to the first position to bring the spiking devices into ground contact is provided and comprises a lift bar 50 mounted on the plate 47 and an elongate handle 51 which extends through the body 10 to be pivotally connected to a top of a beam 52 forwardly uniting two laterally mounted brackets 53 pivoted on cross shaft 55 and carrying rearwardly an axle 99 mounting the rear two wheel arrangements 11. The lift bar 50 and the handle 51 are connected together through a locking mechanism 54. The locking mechanism 54 is secured to the bar 50 and has a transverse pin 56 engagable in a transverse groove 57 provided in the handle 51. The handle 51 is biased downwardly to normally retain the pin 56 in the groove 57. The biasing mechanism for the handle 51 comprises a toggle 61 pivoted in the locking mechanism, the forward end of which has a spring 62 bearing on it, and the rearward end of which has a roller 63 in contact with the handle 51. In this position, the rear wheel arrangements 11 are lowered and the spiking devices 12 lifted away from the ground ie. the second position relative to ground surface 'A'. By a deliberate upward movement of the handle 51, the pin 56 is released from the groove 57 and the handle 51 can be moved axially downwardly until the pin 56 abuts stop face 58 of a downward projection 59 provided on the handle 51. This downward movement causes the beam 52 to move downwardly to raise the wheel arrangements 11 and allow the spiking devices 12 to be ground engaging ie. the first position relative to ground surface 'B'.

In the first embodiment as shown in Fig. 1, the apparatus shown is of a pedestrian operated power driven type with the wheel arrangements 11 all being low friction rotatable. The plunger 28 is of a single acting type and a limit stop 49 is provided to prevent pivotal movement of the spiking device 12 other than by compression of the plunger 28.

A 'U' support bar 60, as shown in Fig. 1, is provided extending from the front side of the body 10, with the web thereof parallel to the front side, to support the apparatus uprigthly when tipped over about its front wheel arrangements 11.

By virtue of the horizontal movements of the devices 12, the apparatus of this embodiment is propelled by the reaction of the devices 12 with the ground.

In use of this embodiment, the engine 30 once started transfers power through the power transmission arrangement to the crankshaft 16 to cause the arm levers 18 to move to impart vertical and horizontal movements to the spiking devices 12. With the handle 51 is in its first position, the tines 32 of the spiking devices enter the ground in the phased sequence. The plugs of earth punched out by the tines entering the ground progressively pass up the inside of the tines and exit from the open top thereof to fall onto the ground for subsequent collection. When the apparatus has completed a run, the apparatus is manouvered into a second run or the spiking devices can be moved into the second position, manouvered round and then into the first position.

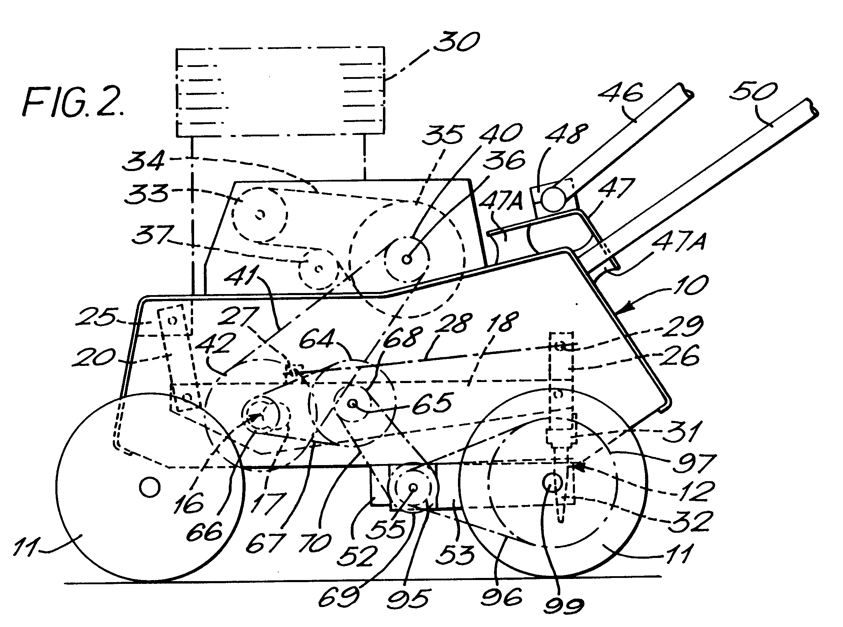

In a second embodiment as shown in Fig. 2, a pedestrian operated driven type of apparatus is provided. This embodiment is similiar to that of Fig. 1 except that a transmission drive is provided. A sprocket wheel 64 is mounted on an intermediate shaft 65 parallel to and above the cross shaft 55. A smaller sprocket wheel 66 is fast on the crankshaft 16 and a chain 67 is entrained around sprocket wheels 64 and 66. The intermediate shaft 65 also mounts a smaller sprocket wheel 68 and the cross shaft 55 fixedly carries a sprocket wheel 69. A chain 70 is entrained around sprocket wheels 68 and 69. A second sprocket wheel 95 is attached to each end of the cross shaft 55 via a roller clutch arrangement. This allows sprocket wheel 95 on either end of cross shaft 55 to over run cross shaft speed. Hence the driven rear wheel arrangements 11 at that side free wheels enabling it to turn corners. Sprocket wheels 95 are connected through chain 96 to a sprocket wheel 97 on the rear wheel arrangement drive axle 99.

In use, the apparatus is used and operates in much the same way as the apparatus of the first embodiment with the benefit of being driven by the rear wheel arrangements 11 as opposed to being tine driven.

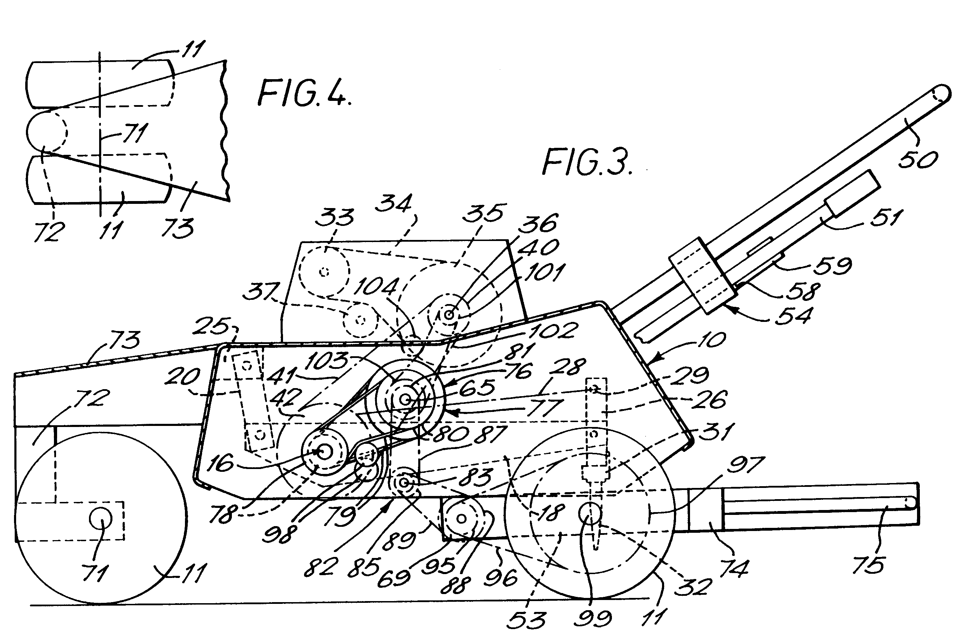

In a third embodiment as shown in Figs 3, 4, 5 and 6, a pedestrian operated driven apparatus is shown, the apparatus having a differential drive mechanism enabling it to turn corners without the roller clutch arrangements incorporated in sprocket wheels 95 as described in the second embodiment. the differential gear box 82 has the advantage that drive to both rear wheel arrangements continue when turning corners or operating in an arc. The front wheel arrangements 11 are low friction castor wheels on a common axle 71, the axle 71 being fast with an upright 72 pivotally carried by a nose frame 73 secured to the front of the body 10. The brackets 53 are extended rearwardly and mount a ballast cross beam 74. A 'U' tread bar 75 extends from the beam 74 with the web thereof parallel to the beam 74. The ballast beam 74 is provided to increase the weight to ensure the two rear wheel arrangements 11 stay firmly on the ground even when the head incorporating the spiking device is rising and falling during operation as it will when it strikes stones and hard ground. As well as providing ballast for rear wheel arrangements 11, tread bar 75 when it is stepped on provides assistance to lift bar 50 when raising or lowering the apparatus from second to first positions.

Two clutch mechanisms are provided to permit different spiking patterns of holes per square metre to be selected for use. The clutch mechanisms 76, 77 each comprise two pulley wheels 78, 80 with a belt 79 therearound. Each belt 79 has a jockey wheel 98 to tension the belt 79 and transfer motion from one ground speed to another. A three position lever (not shown) is provided on the operating handle 46 with the three positions representing narrow Pattern, neutral and wide pattern. The lever is connected by cable (not shown) to each jockey wheel 98 so to bring one or other or neither into operation. Mechanism 76 relates to a narrow hole pattern and mechanism 77 relates to a wide hole pattern. The pulley wheels 78 on the crankshaft 16 have a roller clutch mechanism to allow them to rotate faster than the crankshaft 16 when a rapid transmission arrangement (to be described hereinafter) is engaged. The pulley wheels 78, 80 are differently diametered as shown to provide faster or slower movement. The crankshaft 16 and shaft 65 are extended out through the lateral side of the body 10 with the wheels 78 mounted on the protruding crankshaft 16 and the wheels 80 mounted on the protruding intermediate shaft 65. At the outer end of the intermediate shaft 65, a sprocket wheel 81 is mounted. A differential gear box 82 is provided having a shaft 83 carrying three sprocket wheels 84, 85, and 86. A chain 87 is entrained around sprocket wheel 81 and sprocket wheel 85. A sprocket wheel 88 is fast with the cross shaft 55 and a chain 89 is entrained around wheel 88 and wheel 84 of the gear box 82. A compound sprocket wheel 90, 91 is also carried on the cross shaft 55 as shown. This wheel 90, 91 rotates on the cross shaft 55. Sprocket wheel 86 of the gear box 82 and sprocket wheel 90 are connected by a chain 92 being entrained around them. The sprocket wheel 91 is connected through chain 94 to sprocket wheel 93 on the stub axle 99 for the rear wheel arrangements 11. A sprocket wheel 93A is also mounted on the stub axle 99A. The compound sprocket wheel 90, 91 transfers motion from the gear box 82 to the sprocket wheel 93 while the sprocket wheel 88 transfers motion from the gear box 82 to the sprocket wheel 93A.

The rapid transport transmission arrangement is provided for use when the spiking devices 12 are in a second position. This transmission comprises a pulley wheel 101 on the drive shaft 36 connected by belt 102 to a pulley wheel 103 on the intermediate shaft 65. A jockey wheel 104 operates to tension the belt 102 to transfer motion from the drive shaft 36 to the rear wheel arrangements 11. The jockey wheel 104 is brought into operation by a lever (not shown) on the operating handle 46 connected by cable to an arm (not shown) mounting the jockey wheel 104. Due to the roller clutch mechanism in the pulley wheels 78, the pulley wheels 78 can move at a greater speed than the crankshaft 16 as described above. This rapid transmission arrangement can override the pattern selection lever in whichever setting it is at.

In this embodiment, for each lever 18, the limit stop 49 is omitted and the plunger 28 is a double acting spring type which allows the tines to pivot in both directions about its mounting on the lever 18. This double acting spring plunger 28 with the limit stop 49 removed, renders the apparatus non self propelling by reaction of the implements with the ground, leaving all the forward motion dependant on the rear wheel arrangements 11. This is advantageous where multiaeration patterns are desired by virtue of variable speed ground drives. It is also advantageous when fitted to a tractor mounted apparatus described later where a tractor ground speed may be different to that of the spiking devices.

Two or more different spiking devices 12 can be provided having two or three or more tines respectively, and these can be selected as required with simply interchanging on the implement head 26. Control means are desirably provided to enable one or other of the clutch mechanisms to be selected.

In use of this embodiment, the apparatus operates similarly to that of the second embodiment with the exception that the clutch mechanisms have been included to provide a choice of speeds to give a different hole pattern in the ground, and the front wheel castor arrangements provide easier manouverability. Also, the rapid transmission arrangement assists in allowing the apparatus to be moved from one area to another area, such as for example between greens on a golf course.

In a modification of all embodiments, the plunger 28 may be mounted below the lever 18 with the lever 18 connected adjacent to the top of the respective implement head 26.

Alternatively, tubes (not shown) can be fitted to the tops of the tines, the tubes exiting to a container mounted on the rear of the body, or a suction head may be provided rearwardly of the body 10 to collect the cores. The cores once collected can be pulverised and mixed with fertiliser to serve as top dressing to be scattered over the spiked ground.

Other modifications are possible and the above described arrangement of crank pins illustrates that two, three, four, five of six levers 18 can be fitted to the apparatus as shown in Figs. 7A to 7E. Any number of crank pins and levers in any sequence can be fitted to the apparatus. Also, the combined vertical and horizontal motions can be imparted by use of a conventional crankshaft or some form of cam mechanism.

The apparatus can be used as a tractor mounted unit comprising a P.T.O. shaft drive from the tractor to a gear box in place of the engine. The open bottomed body 10 would be attached to the tractor via a hydraulically operated three point linkage. For example, a double version of the four lever arrangement ie. using eight levers with two sets of chains and sprocket wheels transmitting power from a top mounted tractor driven gear box. A heavier version of the apparatus can be used for aeration purposes of argicultural grassland.

An inexpensive domestic version of the apparatus can be made featuring a crankshaft with two crank pins encased in a narrower body. This could feature only two front wheel arrangements and instead of the rear wheel arrangements and lifting mechanism two ground engaging skids or ski shaped bars can be provided attached to the body. The apparatus would simply be lifted or tilted by the operating handle onto the front wheel arrangements and transported like a wheel barrow.

The advantages would be a less expensive apparatus for the domestic user using the same means and mechanisms as hereinbefore described and giving a professional result.

## Claims

1. A ground treatment apparatus comprising a support body (10) having an open bottom; at least one treatment implement (12) supported by said support body (10) and being movable through said open bottom of said support body (10), said at least one treatment implement (12) having an implement head (26) extending vertically; driving means carried by said support body (10) for driving said treatment implement (12) in a cyclical path relative to said support body (10), said cyclical path including both vertical and horizontal movement; biasing means (14) for biasing said implement (12) to a substantially vertical disposition when said implement is stationary with respect to said support body (10); said driving means including a connecting link (20) having a first end and a second end, said first end being pivotably connected to said support body (10); an arm lever (18) having a central portion, a first end pivotably connected to said second end of said connecting link (20), and a second end connected to said at least one treatment implement (12); a drive mechanism (16) connected to said central portion of said arm lever (18) for cyclically driving said arm lever (18) in a substantially circular motion; the support body (10) being supported off the ground by ground-engaging support arrangements at the leading and trailing ends, respectively, of the support body (10), the support arrangements being mounted on the body in an adjustable manner whereby the body (10) is tiltable from a first position whereat the spiking devices can penetrate the ground, to a second position whereat all of the spiking devices are precluded from engaging the ground characterised in that position-changing means for movement of the body (10) between first and second positions and vice versa comprises an elongate handle (51) manipulatable lengthwise between said first and second positions, the handle (51) having a transverse groove (57) engagable in the second position around a transverse pin (56) of a locking mechanism (54), and a projection (59) engagable in the first position against said pin (56).

2. Apparatus as claimed in Claim 1, characterised in that the handle (51) extends through the body (10) and is pivotally connected to a beam (52) united with at least two spaced brackets (53) pivoted on a cross shaft (55), the brackets (53) carrying on the opposite side of the cross shaft (55) from the beam (52) ground-engaging support arrangements.

3. Apparatus as claimed in Claim 1, characterised in that the locking mechanism (54) is carried on a lift bar (50) secured to the body (10) in a parallel attitude to said handle (51), the locking mechanism (54) comprising said transverse pin (56) and a biasing mechanism to hold the groove (57) of the handle (51) in engagement with said pin (56).

4. Apparatus as claimed in Claim 1, 2 or 3, characterised in that the or each treatment implement (12) is a ground spiking device.

5. Apparatus as claimed in anyone of Claims 1 to 4, characterised in that a plurality of treatment implements (12) are provided in a lateral array.

6. Apparatus as claimed in Claim 5, characterised in that the treatment implements (12) are mounted on the driving means out of phase with each other.

7. Apparatus as claimed in Claim 6, characterised in that the driving means comprises a drive mechanism (16) and a series of arm levers (18) carried thereon to impart combined vertical and horizontal movements to the implements (12).

8. Apparatus as claimed in any one of Claims 1 to 7, characterised in that power means is provided to operate the driving means.

9. Apparatus as claimed in any one of the preceding Claims, characterised in that the support body (10) is substantially rectangular in plan.

10. Apparatus as claimed in any one of Claims 7 to 9, characterised in that the reaction of the devices with the ground by virtue of the horizontal movements of the devices, propels the apparatus thereacross.

11. Apparatus as claimed in any one of Claims 7 to 10, characterised in that the support arrangements are wheel arrangements (11) at both the leading and trailing ends, and a transmission drive is provided from the drive mechanism (16) to operate the wheel arrangements (11) at the trailing end of the body (10).

12. Apparatus as claimed in any one of Claims 7 to 11, characterised in that the drive mechanism (16), on rotation, imparts eccentric motion to the levers (18).

13. Apparatus as claimed in any one of Claims 7 to 12, characterised in that the drive mechanism (16) is a crankshaft having a series of crank pins (17).

14. Apparatus as claimed in Claim 13, characterised in that the crankshaft (16) is assembled from similar cylindrical segments (15) bolted together, and the segments (15) along a centre line of the crankshaft (16) each are provided with a rabbet (13) to receive an adjoining crank pin (17).

15. Apparatus as claimed in Claim 14, characterised in that the axes of the crank pins (17) are out of phase with each other.

16. Apparatus as claimed in any one of the preceding Claims, characterised in that two clutch mechanisms (76,77) are provided to permit different spiking patterns to be selected for use.

17. Apparatus as claimed in Claim 16, characterised in that control means are provided to enable one or other of the clutch mechanisms (76,77) to be selected.

18. Apparatus as claimed in any one of the preceding Claims, characterised in that a power transmission arrangement is provided to transfer motion from the power means to the driving means.

19. Apparatus as claimed in any one of Claims 11 to 18, characterised in that a rapid transport transmission arrangement is provided to the rear wheel arrangements (11) by-passing the driving means.

20. Apparatus as claimed in any one of the preceding Claims 1 to 10 or Claims 12 to 19 when not dependant on Claim 11, characterised in that the ground-engaging support arrangements are wheel arrangements (11) at the leading end and skid arrangements at the trailing end with a transmission drive provided from the drive mechanism to operate the wheel arrangements at the leading end of the body (10).

21. Apparatus as claimed in any one of the preceding Claims 1 to 20, characterised in that the implement head (26) extends upwardly above the arm lever (18) and the biasing means (14) is a spring plunger (28) pivotally connected at one end to said arm lever (18) and pivotally connected at another end thereof to said implement head (26).

22. Apparatus as claimed in any one of the preceding Claims 3 to 21, characterised in that the biasing mechanism comprises a pivotal toggle (61), one end of which has a spring (62) bearing against it and its other end having a roller (63) in contact with the handle (51).

## Patentansprüche

1. Bodenbehandlungsgerät, mit einem Gehäuse (10) mit einem offenen Boden; mindestens einem von dem Gehäuse (10) gehaltenen und durch den offenen Boden des Gehäuses (10) bewegbaren Behandlungswerkzeug (12), wobei das mindestens eine Behandlungswerkzeug (12) einen sich vertikal erstreckenden Werkzeugkopf (26) aufweist; einer von dem Gehäuse (10) getragenen Antriebseinrichtung zum Antreiben des Behandlungswerkzeuges (12) in einer zyklischen Bahn relativ zu dem Gehäuse (10), wobei die zyklische Bahn sowohl Vertikalals auch Horizontalbewegung einschließt; einer Vorspanneinrichtung (14) zum Vorspannen des Werkzeuges (12) in eine im wesentlichen vertikale Ausrichtung, wenn das Werkzeug in bezug auf das Gehäuse (10) stationär ist; wobei die Antriebseinrichtung ein Zwischenglied (20) mit einem ersten Ende und einem zweiten Ende aufweist, wobei das erste Ende mit dem Gehäuse (10) schwenkbar verbunden ist; einem Hebelarm (18) mit einem Mittelteil, einem mit dem zweiten Ende des Zwischengliedes (20) schwenkbar verbundenen ersten Ende und einem mit dem mindestens einen Behandlungswerkzeug (12) verbundenen zweiten Ende; einem Antriebsmechanismus (16), der zum zyklischen Antreiben des Hebelarmes (18) in einer im wesentlichen kreisförmigen Bewegung mit dem Mittelteil des Hebelarms (18) verbunden ist; wobei das Gehäuse (10) von den Boden kontaktierenden Stützeinrichtungen am vorderen bzw. hinteren Ende des Gehäuses (10) vom Boden beabstandet gestützt ist, wobei die Stützeinrichtungen einstellbar an dem Gehäuse befestigt sind, wodurch das Gehäuse (10) aus einer ersten Position, in der die Stecheinrichtungen in den Boden eindringen können, in eine zweite Position verschwenkbar ist, in der alle Stecheinrichtungen von dem Eingriff mit dem Boden ausgeschlossen sind, dadurch gekennzeichnet, daß eine Positionswechseleinrichtung zum Bewegen des Gehäuses (10) zwischen der ersten und der zweiten Position und umgekehrt einen verlängerten Griff (51) aufweist, der zwischen der ersten und der zweiten Position in Längsrichtung handhabbar ist, wobei der Griff (51) eine Querrille (57), die in der zweiten Position einen Querbolzen (56) eines Verriegelungsmechanimus (54) umgreift, und einen Vorsprung (59) aufweist, der in der ersten Position an dem Bolzen (56) anliegen kann.

2. Gerät nach Anspruch 1, dadurch gekennzeichnet, daß der Griff (51) sich durch das Gehäuse (10) erstreckt und mit einem Träger (52) schwenkbar verbunden ist, der mit mindestens zwei voneinander beabstandeten Armen (53) verbunden ist, die um eine Querachse (55) schwenken, wobei die Arme (53) von dem Träger (52) aus auf der gegenüberliegenden Seite der Querachse (55) den Boden kontaktierende Stützeinrichtungen tragen.

3. Gerät nach Anspruch 1, dadurch gekennzeichnet, daß der Verriegelungsmechanismus (54) auf einer an dem Gehäuse (10) parallel zum Griff (51) befestigten Hebestange (50) getragen ist, wobei der Verriegelungsmechanismus (54) den Querbolzen (56) und einen Vorspannmechanismus aufweist, um die Rille (57) des Griffes (51) im Eingriff mit dem Bolzen (56) zu halten.

4. Gerät nach Anspruch 1, 2 oder 3, dadurch gekennzeichnet, daß das oder jedes Behandlungswerkzeug (12) eine Bodenstecheinrichtung ist.

5. Gerät nach einem der Ansprüche 1 bis 4, dadurch gekennzeichnet, daß mehrere Behandlungswerkzeuge (12) nebeneinander angeordnet sind.

6. Gerät nach Anspruch 5, dadurch gekennzeichnet, daß die Behandlungswerkzeuge (12) relativ zueinander phasenversetzt an der Antriebseinrichtung angebracht sind.

7. Gerät nach Anspruch 6, dadurch gekennzeichnet, daß die Antriebseinrichtung einen Antriebsmechanismus (16) und eine Reihe von darauf getragenen Hebelarmen (18) aufweist, um den Werkzeugen (12) kombinierte Vertikal- und Horizontalbewegungen mitzuteilen.

8. Gerät nach einem der Ansprüche 1 bis 7, dadurch gekennzeichnet, daß zum Betreiben der Antriebseinrichtung ein Motor vorgesehen ist.

9. Gerät nach einem der vorhergehenden Ansprüche, dadurch gekennzeichnet, daß das Gehäuse (10) in Draufsicht im wesentlichen rechteckig ist.

10. Gerät nach einem der Ansprüche 7 bis 9, dadurch gekennzeichnet, daß die Reaktion der Einrichtungen mit dem Boden aufgrund der Horizontalbewegungen der Einrichtungen das Gerät über den Boden vorantreibt.

11. Gerät nach einem der Ansprüche 7 bis 10, dadurch gekennzeichnet, daß die Stützeinrichtungen Radsätze (11) an sowohl den vorderen als auch den hinteren Enden sind und von dem Antriebsmechanismus (16) eine Kraftübertragung vorgesehen ist, um den Radsatz (11) am hinteren Ende des Gehäuses (10) zu betreiben.

12. Gerät nach einem der Ansprüche 7 bis 11, dadurch gekennzeichnet, daß der Antriebsmechanismus (16) bei Drehung den Hebeln (18) eine exzentrische Bewegung erteilt.

13. Gerät nach einem der Ansprüche 7 bis 12, dadurch gekennzeichnet, daß der Antriebsmechanismus (16) eine Kurbelwelle mit einer Reihe von Kurbelzapfen (17) ist.

14. Gerät nach Anspruch 13, dadurch gekennzeichnet, daß die Kurbelwelle (16) aus miteinander verschraubten gleichartigen zylindrischen Segmenten (15) zusammengesetzt ist und die Segmente (15) entlang einer Mittellinie der Kurbelwelle (16) jeweils mit einer Nut (13) zur Aufnahme eines benachbarten Kurbelzapfens (17) versehen sind.

15. Gerät nach Anspruch 14, dadurch gekennzeichnet, daß die Achsen der Kurbelzapfen (17) relativ zueinander phasenversetzt sind.

16. Gerät nach einem der vorhergehenden Ansprüche, dadurch gekennzeichnet, daß zwei Kupplungsmechanismen (76,77) vorgesehen sind, um für die Verwendung die Wahl unterschiedlicher Stechmuster zu ermöglichen.

17. Gerät nach Anspruch 16, dadurch gekennzeichnet, daß eine Steuereinrichtung vorgesehen ist, um die Wahl des einen oder des anderen der Kupplungsmechanismen (76,77) zu ermöglichen.

18. Gerät nach einem der vorhergehenden Ansprüche, dadurch gekennzeichnet, daß zur Bewegungsübertragung von dem Motor zu der Antriebseinrichtung eine Kraftübertragungseinrichtung vorgesehen ist.

19. Gerät nach einem der Ansprüche 11 bis 18, dadurch gekennzeichnet, daß unter Umgehung der Antriebseinrichtung eine Schnelltransportkraftübertragungseinrichtung für den Hinterradsatz (11) vorgesehen ist.

20. Gerät nach einem der vorhergehenden Ansprüche 1 bis 10 oder 12 bis 19, sofern nicht von Anspruch 11 abhängig, dadurch gekennzeichnet, daß die den Boden kontaktierende Stützeinrichtung am vorderen Ende ein Radsatz (11) und am hinteren Ende eine Gleiteinrichtung ist, wobei von dem Antriebsmechanismus eine Kraftübertragung vorgesehen ist, um den Radsatz am vorderen Ende des Gehäuses (10) anzutreiben.

21. Gerät nach einem der vorhergehenden Ansprüche 1 bis 20, dadurch gekennzeichnet, daß der Werkzeugkopf (26) sich nach oben über den Hebelarm (18) erstreckt und die Vorspanneinrichtung (14) eine federbelastete Kolbenstange (28) ist, die an einem Ende schwenkbar mit dem Hebelarm (18) verbunden ist und an dem anderen Ende schwenkbar mit dem Werkzeugkopf (26) verbunden ist.

22. Gerät nach einem der vorhergehenden Ansprüche 3 bis 21, dadurch gekennzeichnet, daß der Vorspannmechanismus einen Schwenkhebel (61) aufweist, dessen eines Ende eine an ihm anliegende Feder (62) aufweist und dessen anderes Ende eine mit dem Griff (51) in Kontakt befindliche Walze (63) aufweist.

## Revendications

1. Appareil de traitement du sol, comprenant un corps de support (10) muni d'un fond ouvert ; au moins un outil de traitement (12) supporté par le corps de support (10) et pouvant se déplacer à travers le fond ouvert du corps de support (10), cet outil de traitement au moins unique (12) comportant une tête d'outil (26) disposée verticalement ; des moyens d'entraînement portés par le corps de support (10) pour entraîner l'outil de traitement (12) dans une course cyclique par rapport au corps de support (10), cette course cyclique comprenant à la fois un mouvement vertical et un mouvement horizontal ; des moyens de poussée (14) pour pousser l'outil (12) vers une position essentiellement verticale lorsque l'outil est fixe par rapport au corps de support (10) ; les moyens d'entraînement comprenant une tige de liaison (20) munie d'une première extrémité et d'une seconde extrémité, la première extrémité étant reliée en pivotement au corps de support (10) ; un bras de levier (18) comportant une partie centrale, une première extrémité reliée en pivotement à la seconde extrémité de la tige de liaison (20), et une seconde extrémité reliée à l'outil de traitement au moins unique (12) ; un mécanisme d'entraînement (16) relié à la partie centrale du bras de levier (18) pour entraîner cycliquement le bras de levier (18) dans un mouvement essentiellement circulaire ; le corps de support (10) étant supporté dans une position écartée du sol par des dispositifs de support d'engagement au sol placés respectivement à l'extrémité avant et à l'extrémité arrière du corps de support (10), les dispositifs de support étant montés sur le corps d'une manière réglable de façon qu'on puisse faire basculer le corps (10) pour le faire passer d'une première position dans laquelle les dispositifs de piquage peuvent pénétrer dans le sol, à une seconde position dans laquelle on empêche tous les dispositifs de piquage de s'engager dans le sol, caractérisé en ce que des moyens de changement de position destinés à faire passer le corps (10) d'une première position à une seconde position et vice versa, comprennent un manche allongé (51) manipulable dans le sens de la longueur entre la première position et la seconde position, le manche (51) comportant une rainure transversale (57) pouvant s'engager, dans la seconde position, autour d'une tige transversale (56) d'un mécanisme de verrouillage (54), et une projection (59) pouvant s'engager, dans la première position, contre la tige (56).

2. Appareil selon la revendication 1, caractérisé en ce que le manche (51) passe à travers le corps (10) et se trouve relié en pivotement à une poutre (52) jointe à au moins deux consoles espacées (53) pouvant pivoter sur un arbre transversal (55), les consoles (53) portant les dispositifs de support d'engagement au sol, du côté opposé à l'arbre transversal (55) par rapport à la poutre (52).

3. Appareil selon la revendication 1, caractérisé en ce que le mécanisme de verrouillage (54) est monté sur une barre de levage (50) fixée au corps (10) dans une position parallèle au manche (51), le mécanisme de verrouillage (54) comprenant la tige transversale (56) et un mécanisme de poussée destiné à maintenir la rainure (57) du manche (51) en prise avec la tige (56).

4. Appareil selon la revendication 1, 2 ou 3, caractérisé en ce que l'outil ou chaque outil de traitement (12) est un dispositif de piquage du sol.

5. Appareil selon l'une quelconque des revendications 1 à 4, caractérisé en ce qu'une pluralité d'outils de traitement (12) sont utilisés dans un réseau latéral.

6. Appareil selon la revendication 5, caractérisé en ce que les outils de traitement (12) sont montés sur les moyens d'entraînement en étant déphasés les uns par rapport aux autres.

7. Appareil selon la revendication 6, caractérisé en ce que les moyens d'entraînement comprennent un mécanisme d'entraînement (16) et une série de bras de leviers (18) montés sur celui-ci pour communiquer aux outils (12) des mouvements verticaux et horizontaux combinés.

8. Appareil selon l'une quelconque des revendications 1 à 7, caractérisé en ce que des moyens à moteur sont utilisés pour faire fonctionner les moyens d'entraînement.

9. Appareil selon l'une quelconque des revendications précédentes, caractérisé en ce que le corps de support (10) est essentiellement rectangulaire dans un plan.

10. Appareil selon l'une quelconque des revendications 7 à 9, caractérisé en ce que la réaction des dispositifs avec le sol, du fait des mouvements horizontaux de ces dispositifs, propulse l'appareil en travers.

11. Appareil selon l'une quelconque des revendications 7 à 10, caractérisé en ce que les dispositifs de support sont des dispositifs à roues (11) à la fois à l'extrémité avant et à l'extrémité arrière, et en ce qu'une transmission d'entraînement est prévue à partir du mécanisme d'entraînement (16) pour faire fonctionner les dispositifs à roues (11) à l'extrémité arrière du corps (10).

12. Appareil selon l'une quelconque des revendications 7 à 11, caractérisé en ce que le mécanisme d'entraînement (16), pendant sa rotation, communique un mouvement excentrique aux leviers (18).

13. Appareil selon l'une quelconque des revendications 7 à 12, caractérisé en ce que le mécanisme d'entraînement (16) est un vilebrequin comportant une série de tourillons (17).

14. Appareil selon la revendication 13, caractérisé en ce que le vilebrequin (16) est assemblé à partir de segments cylindriques analogues (15) boulonnés ensemble, et en ce que les segments (15), le long de l'axe central du vilebrequin (16), sont munis chacun d'une feuillure (13) pour recevoir un tourillon adjacent (17).

15. Appareil selon la revendication 14, caractérisé en ce que les axes des tourillons (17) sont déphasés les uns par rapport aux autres.

16. Appareil selon l'une quelconque des revendications précédentes, caractérisé en ce qu'on utilise deux mécanismes d'embrayage (76, 77) pour pouvoir sélectionner des motifs de piquage différents en cours d'utilisation.

17. Appareil selon la revendication 16, caractérisé en ce qu'on utilise des moyens de commande pour pouvoir sélectionner l'un ou l'autre des mécanismes d'embrayage (76, 77).

18. Appareil selon l'une quelconque des revendications précédentes, caractérisé en ce qu'on utilise un dispositif de transmission de puissance pour transmettre le mouvement des moyens moteurs aux moyens d'entraînement.

19. Appareil selon l'une quelconque des revendications 11 à 18, caractérisé en ce qu'un dispositif de transmission de transport rapide est prévu pour les dispositifs de roues arrières (11) en court-circuitant les moyens d'entraînement.

20. Appareil selon l'une quelconque des revendications précédentes 1 à 10, ou des revendications 12 à 19 lorsqu'elles ne dépendent pas de la revendication 11, caractérisé en ce que les dispositifs de support d'engagement au sol sont des dispositifs à roues (11) à l'extrémité avant, et des dispositifs à patins à l'extrémité arrière, avec une transmission d'entraînement prévue à partir du mécanisme d'entraînement pour faire fonctionner les dispositifs de roues à l'extrémité avant du corps (10).

21. Appareil selon l'une quelconque des revendications précédentes 1 à 20, caractérisé en ce que la tête d'outil (26) s'étend vers le haut au-dessus du bras de levier (18), et en ce que les moyens de poussée (14) sont constitués par un plongeur à ressort (28) relié en pivotement par une extrémité au bras de levier (18) et relié en pivotement par son autre extrémité à la tête d'outil (26).

22. Appareil selon l'une quelconque des revendications précédentes 3 à 21, caractérisé en ce que le mécanisme de poussée comprend un basculeur pivotant (61) dont une extrémité comporte un ressort (62) s'appuyant contre celui-ci, et dont l'autre extrémité comporte un galet (63) en contact avec le manche (51).
